Europäisches Patentamt

European Patent Office

Office européen des brevets

(19)

(11) EP 1 321 576 A1

(12) **EUROPEAN PATENT APPLICATION**

(43) Date of publication:
25.06.2003 Bulletin 2003/26

(51) Int Cl.$^7$: **D21H 27/40**, B31F 1/07

(21) Application number: 02445183.3

(22) Date of filing: 18.12.2002

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(30) Priority: 20.12.2001 SE 0104396
20.12.2001 US 341270 P

(71) Applicant: **SCA Hygiene Products AB**
**405 03 Göteborg (SE)**

(72) Inventor: **Hollmark, Holger**
**114 47 Stockholm (SE)**

(74) Representative: **Egeröd, Lisbeth et al**
**Ström & Gulliksson IP AB**
**Sjöporten 4**
**417 64 Göteborg (SE)**

(54) **A laminated tissue paper and a method of forming it**

(57) A tissue paper product having at least two laminated plies (10), each of which is individually embossed so as to exhibit a three-dimensional pattern of alternating raised ridges (11) and recessed areas (12), in which the ridges (11) of each individual ply (10a,b) form a network pattern, said plies being joined together by adhesive applied on the contacting ridges of one or both of the embossed paper plies.

FIG.3

## Description

### *Technical field*

The present invention refers to a laminated tissue paper having at least two laminated plies, each of which are individually embossed so as to exhibit a three-dimensional pattern of raised ridges. The invention further refers to a method of forming the laminated tissue paper.

### *Background of the invention*

The invention refers to a laminated tissue paper for use as a wiping material such as kitchen wipes, towels, toilet paper, industrial and institutional wipes in which softness and absorption are essential features. Lamination of two or more tissue paper plies in order to produce the final tissue product is well-known in the art. Herewith a more flexible and softer tissue product is obtained as compared to if one single ply with a corresponding thickness and basis weight had been produced as for the laminated product. The absorbent capacity and the bulk are moreover improved.
However, lamination often has an adverse effect on the flexibility of the material causing an increase in the bending stiffness. Various attempts have been made in order to overcome the increased bending stiffness, for example by the technique disclosed in US-A-5,972,466 utilizing flexible joints between the laminates sheets.
The lamination of two or more tissue plies is often made by means of gluing. A mechanical embossing of the plies is also often performed before they are glued together. It is further known to laminate two plies only by means of a mechanical embossing, at which a mechanical joining of the plies occur at the embossing sites.
Through for example WO 99/34055 it is known to impart a three-dimensional pattern in a moist paper web while drying the web by so called impulse drying. The wet paper web is passed through a press nip comprising a rotatable roll which is heated and the paper web when passing through the press nip is given said three-dimensional pattern either by means of a pattern wire and/or by the fact that the heated roll is provided with a pattern intended to be pressed into the paper web against a non-rigid holder-on, such as a felt.. The three-dimensional pattern is also in this case essentially maintained in wet condition of the paper, since it has been imparted to the wet paper web in connection with drying thereof.

### *Summary of the invention*

An object of the present invention is to provide a laminated tissue product in which individually embossed sheets exhibiting a three-dimensional pattern of raised ridges and recessed areas are positioned relative to each other so as to produce a laminated structure with a low bending stiffness and high softness.
This has according to the invention been provided by said plies being laminated together with said ridges facing inwards towards each other, and the ridges of each individual ply forming a network pattern, said plies being joined together by adhesive applied on the contacting ridges of one or both of the embossed paper plies.
In one embodiment network is constituting an array of polygons.
In one embodiment of the invention the raised ridges represent areas of the tissue paper having a higher density than the portions of the tissue paper located in the interstices between the raised ridges.
According to a further embodiment the raised ridges represent areas of the tissue paper having a higher stiffness than the portions of the tissue paper located in the interstices between the raised ridges.
The raised ridges in one embodiment represent a smaller area than the interstices between the raised ridges.
The invention further refers to a method of making a multiply tissue paper, in which each of the plies are an individually embossed paper sheet so as to exhibit a three-dimensional pattern of raised ridges, and the individually embossed plies are laminated together by means of an adhesive. The method comprises the steps of embossing each paper sheet with a three-dimensional structure of ridges wherein the ridges of each individual ply forming a network pattern, laminating the at least two paper sheets together with said ridges facing inwards towards each other and joining together said paper sheets being by adhesive applied on the contacting ridges of one or both of the embossed paper sheets.
According to one embodiment of the invention the method comprises the steps of forming said raised ridges by pressing an embossing roll against the respective paper sheet, said paper sheet being supported by a non-rigid backing.
According to a further embodiment the paper sheets are embossed in a moist or wet condition having a moisture content of at least 20% by weight and the embossing roll is heated so as to provide a simultaneous drying and embossing of the paper sheets.
According to one embodiment of the invention drying and imparting said three-dimensional pattern in the paper sheets is made by impulse drying and impulse embossing, wherein the wet paper sheet is passed through a press nip comprising a rotatable roll, which is heated and that the paper sheet when passing through the press nip is given said three-dimensional pattern either by means of a pattern wire and/or by the fact that the heated roll is provided with a pattern intended to be pressed into the paper sheet against a holder-on. The holder-on preferably has a non-rigid surface.

In an alternative embodiment drying and imparting said three-dimensional pattern in the separately formed paper sheets is made by through-air-drying (TAD) wherein the wet paper sheet is carried by a patterned wire or belt.

### *Description of drawings*

The invention will now be described more in detail with reference to embodiments shown in the accompanying drawings.

Fig. 1 is schematic plan view from above of a paper sheet exhibiting a three-dimensional pattern of raised ridges forming a network.
Fig. 2 is a schematic section through a paper sheet according to Fig. 1.
Fig. 3 is a schematic section through two laminated paper sheets according to the invention.
Fig. 4 is a schematic section through two laminated paper sheets not forming a part of the invention.
Fig. 5 shows a schematic view of an impulse drying and embossing unit.

### *Description of embodiments*

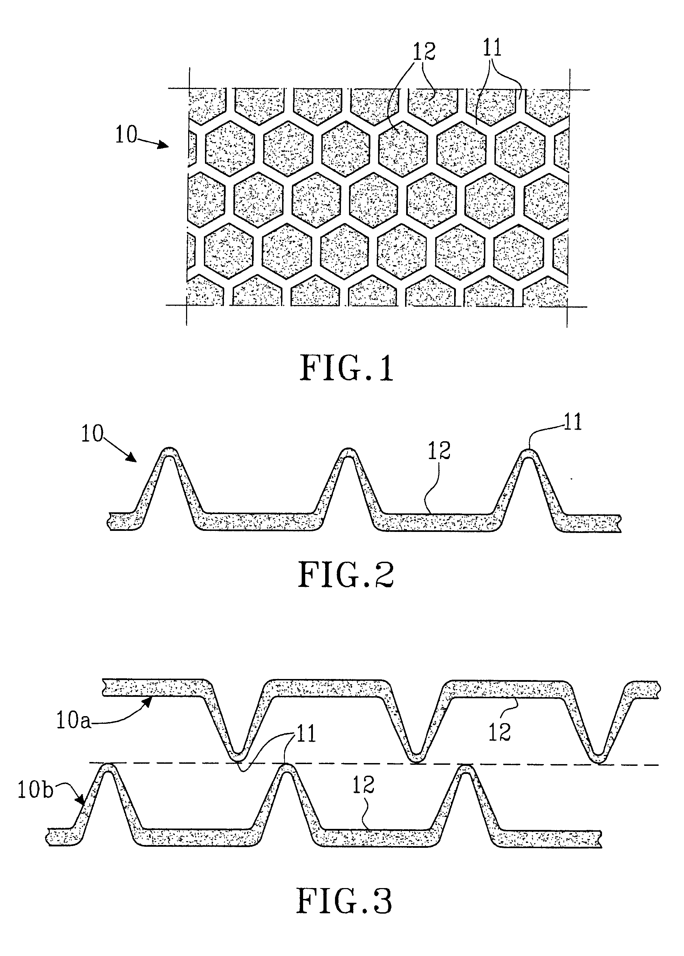

Figure 1 is a plan view of a tissue sheet 10, which has been embossed so as to exhibit a three-dimensional structure of raised ridges 11 forming a continuous network pattern with recessed areas 12 in the interstices between the raised ridges. This tissue sheet is laminated together with a second tissue sheet, which has also been embossed with a pattern of raised ridges 11 and recessed areas 12. The pattern formed by the raised ridges 12 may either be the same or different for the two tissue sheets. It is important to choose the pattern so that the raised ridges 11 of the two tissue sheets, when these are applied together with the raised ridges facing inwards, is such that the raised ridges will act as spacing means keeping the tissue sheets distanced from each other preventing the ridges 12 of one sheet from matching into the recessed areas 12 of the opposite sheet. The only contact points between the two sheets will thus be between the tops of the ridges 12, however not necessarily over the entire area of the tops. This is provided if the ridges 12 are configured in a continuous network pattern.

In the embodiment shown in Fig. 1 the raised ridges 11 form a network in the form of an array of polygons. The polygons maybe identical, as disclosed, but may also be different as to size and/or number of sides. Any optional network pattern may be used, provided it will fulfill the above demands.

Figure 3 illustrates a laminated structure in which two embossed sheets 10, according to Figures 1 and 2, have been laminated together with the raised ridges 11 facing inwards. The sheets 10 are being joined together by means of an adhesive applied to the contacting ridges of one or both of the embossed sheets.

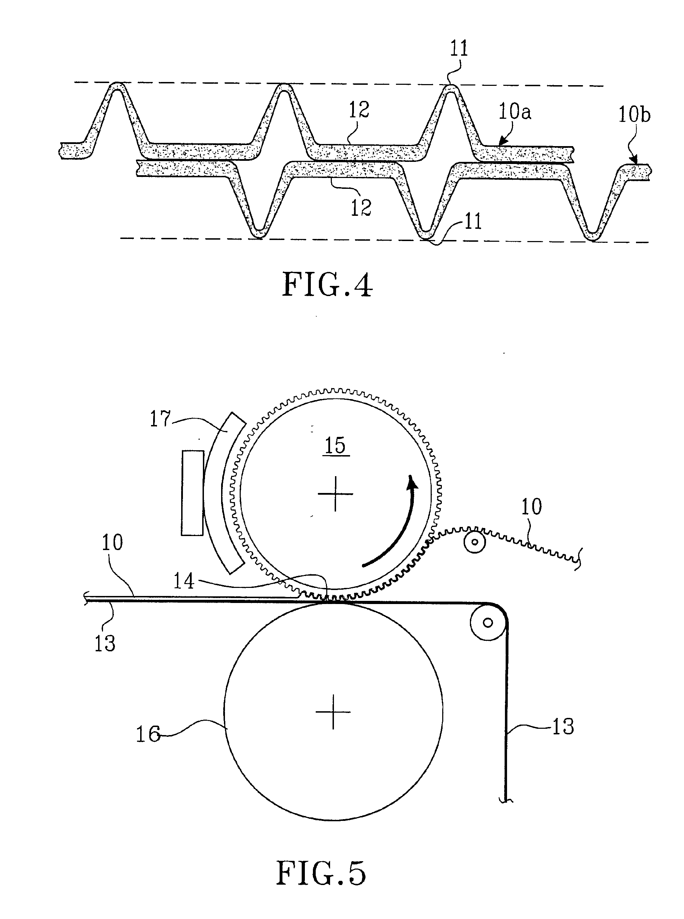

Figure 4 illustrates a laminated structure in which two embossed sheets 10, according to Figures 1 and 2, have been laminated together with the raised ridges 11 facing outwards. This laminated structure does not form a part of the invention.

It has according to the invention been found that if the embossed sheets are joined with the raised ridges 11 facing inwards against each other, the effective moment of inertia will be substantially smaller than if the sheets are joined together with the recessed areas facing inwards. The reduction in effective moment of inertia is virtually independent of the relative positioning of the two sheets along the plane of the sheets. It has further been found that the reduction of the moment of inertia results in a substantially increased flexibility and softness.

The reduction of the moment of inertia is further enhanced if there is a difference in density between the portions of the sheet represented by the raised ridges relative to the recessed areas 12 of the sheet represented by the interstices between the raised ridges 11, so that the material in the raised ridges exhibits higher density than the material in the recessed areas.

A further advantage of the present invention is an increased surface softness of the laminated structure due to the fact that the portions of the sheets 10 represented by the recessed areas 12 between the raised ridges 11 and which have a relative low density will be facing outwards and thereby come into contact with the fingertips of the person handling the material.

The difference in density between the portions of the sheet represented by the raised ridges 11 on one hand and the recessed areas 12 in the interstices between the raised ridges on the other hand can be accomplished by pressing an embossing roll against the sheet, wherein the sheet is supported by a soft backing roll. The pressure exerted on the sheet will then be higher in those areas of the sheet contacting the raised ridges of the embossing roll and the sheet will subsequently be more compacted in those areas.

A simultaneous drying and embossing of a wet paper sheet can be accomplished by the use of the impulse embossing or press forming technique disclosed in WO 99/34055 and schematically illustrated in Figure 5. The wet sheet, supported by the wire or felt 13 and which have been dewatered over suction boxes (not shown) and optionally slightly pressed is brought into an impulse drying nip 14 between two rotatable rolls 15 and 16, at which the roll 15 which is in contact with the paper sheet by heating means 17 is heated to a temperature which is sufficiently high for providing drying of the paper sheet. The surface temperature of the heated roll 15 can vary depending on such factors as the moisture content of the paper sheet, thickness of the paper sheet, the contact time between the paper sheet and the roll and the desired moisture content of the completed paper product. The surface temperature should of course not be so high that the paper sheet is damaged. An appropriate temperature should be in the interval 100-400°C, preferably 150-350°C and most preferably 200-350°C.

The paper sheet is pressed against the heated roll 15 by means of the wire or felt 13 and the backing roll 16, which may or may not be provided with a soft non-rigid surface layer, e g rubber or another resilient material. A very rapid steam generation takes place in the interface between the heated roll 15 and the moist paper sheet, at which the generated steam on its way through the paper sheet carries away water. Instead of the backing roll 16 a press shoe or the like may be used as a holder-on in the impulse drying press nip.

Simultaneously with the impulse drying the paper sheet 10 is given a three-dimensional structure by the fact that the heated roll 14 is provided with an embossing pattern in the form of alternating raised and recessed portions 18, 19. This structure is substantially maintained also in a later wetted condition of the paper, since it has been imparted the wet paper sheet in connection with drying thereof.

The paper sheet 10 may be pressed against a non-rigid surface, e g a compressible press felt 13. The backing roll 16 may also have a flexible surface, e g an envelope surface of rubber, but this is not necessary in order to accomplish the materials and processes of the present invention. The paper sheet 10 is herewith given a three-dimensional structure having a total thickness greater than that of the unpressed paper. By this a high bulk, high absorption and high softness of the paper is achieved. The paper further becomes elastic. At the same time there is obtained a locally varying density in the paper.

The paper sheet 10 may also be pressed against a hard surface, e g a wire 13 and/or a roll 16 having a rigid surface, at which the pattern of the heated roll 15 is pressed into the paper sheet under heavy compression of the paper just opposite the impressions, while the portions therebetween are kept uncompressed.

The three-dimensional pattern imparted in the paper sheet may also be provided by a pattern wire or belt wrapping the heated cylinder 15, which in this case does not need to be patterned.

The three-dimensional patterns imparted to the paper sheets in two consecutive impulse drying and embossing stations may be the same or different.

## *Example*

Laminated tissue structures were made according to the principles outlined in Figure 1-4. The individual sheets were manufactured according to the impulse embossing technique disclosed in WO 99/34055. The individual sheets had a basis weight of 20 g/m2 each and were manufactured from bleached softwood Kraft pulp. Lamination was accomplished by means of a hot melt spray application system. The amount of hot melt glue applied corresponded to a basis weight of between 2 and 6 g/m2.

The bending lengths of the laminated structures were measured using a cantilever method as disclosed in for example ASTM Standard D-1117. The results of the bending length measurements are shown in Table 1.

Table 1

|  | Bending length, cm | Bending length, cm |
|---|---|---|
|  | Ridges facing inwards (Fig.3) | Ridges facing outwards (Fig. 4) |
| MD | 11.0 | 14.0 |
| CD | 9.0 | 13.0 |
| √MD·CD | 10.0 | 13.5 |

From the values of bending lengths shown in Table 1 the values of flexural rigidity G can be calculated according to the formula

$$G = 0.10 \, W \cdot C^3 \, (\text{mg cm})$$

in which W is the basis weight of the tissue paper expressed in g/m2 and C is the bending length expressed in cm. The values of flexural rigidity for the laminated structures with ridges facing inwards and ridges facing outwards respectively are shown in Table 2. The values are shown for strips cut in the machine direction (MD), in the cross direction (CD) and for the geometrical mean of two perpendicular directions.

Table 2

|  | Flexural rigidity, mg cm | Flexural rigidity, mg cm |
|---|---|---|
|  | Ridges facing inwards (Fig.3) | Ridges facing outwards (Fig. 4) |
| MD | $2.6 \cdot 10^3$ | $5.5 \cdot 10^3$ |
| CD | $1.5 \cdot 10^3$ | $4.4 \cdot 10^3$ |
| $\sqrt{MD \cdot CD}$ | $2.0 \cdot 10^3$ | $4.9 \cdot 10^3$ |

The values of flexural rigidity displayed in Table 2 can be converted to softness values on a relative scale according to the principle described by Hollmark (TAPPI, Vol. 66, No. 2, pp 97-99, February, 1983).
The softness values for the laminated structures with the ridges facing inwards and the ridges facing outward respectively are shown in Table 3.

Table 3

|  | Softness | Softness |
|---|---|---|
|  | Ridges facing inwards (Fig.3) | Ridges facing outwards (Fig. 4) |
| MD | 13 | 10 |
| CD | 17 | 11 |
| $\sqrt{MD \cdot CD}$ | 15 | 11 |

The invention is not limited to the embodiments described and shown but several modifications are possible within the scope of the claims.

**Claims**

1. A tissue paper product having at least two laminated plies (10a,b), each of which are individually embossed so as to exhibit a three-dimensional structure of alternating raised ridges (11) and recessed areas (12), **characterized in that** said plies being laminated together with said ridges (11) facing inwards towards each other, and the ridges (11) of each individual ply (10a,b) forming a network pattern, said plies being joined together by adhesive applied on the contacting ridges of one or both of the embossed paper plies.

2. A multiply tissue paper as claimed in claim 1, **characterized in that** said network pattern is constituting an array of polygons.

3. A multiply tissue paper as claimed in any of the preceding claims, **characterized in that** the raised ridges (11) represent areas of the tissue paper having a higher density than the areas (12) located in the interstices between the raised ridges.

4. A multiply tissue paper as claimed in any of the preceding claims, **characterized in that** the raised ridges (11) represent areas of the tissue paper having a higher stiffness than the areas (12) located in the interstices between the raised ridges.

5. A multiply tissue paper as claimed in any of the preceding claims, **characterized in that** the raised ridges (11) represent a smaller area than the areas (12) located in the interstices between the raised ridges.

6. A method of making a multiply tissue paper, in which each of the plies is an individually embossed paper sheet so as to exhibit a three-dimensional pattern of raised ridges (11) and recessed areas (12), and the individually embossed plies are laminated together by means of an adhesive,
**characterized in** embossing each paper sheet with a three-dimensional structure of ridges wherein the ridges (11) of each individual sheet (10a,b) forming a network pattern, laminating the at least two paper sheets (10a, b) together with said ridges (11) facing inwards towards each other and joining together said paper sheets being by adhesive applied on the contacting ridges of one or both of the embossed paper sheets.

7.  A method as claimed in claim 6,
    **characterized in** forming said three-dimensional pattern by pressing an embossing roll (15) against the respective paper sheet (10), said paper sheet being supported by a non-rigid backing (14).

8.  A method as claimed in claim 7,
    **characterized in** embossing the paper sheets (10) in a moist or wet condition having a moisture content of at least 20% by weight and heating the embossing roll (15) so as to provide a simultaneous drying and embossing of the paper sheets.

FIG.1

FIG.2

FIG.3

FIG.4

FIG.5

**European Patent Office**

## EUROPEAN SEARCH REPORT

Application Number

EP 02 44 5183

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 294 475 A (MCNEIL KEVIN B) 15 March 1994 (1994-03-15) * column 1 - column 16; claims 1-5; figures 1,2,7-10 * --- | 1,3-6 | D21H27/40 B31F1/07 |
| X | US 6 287 676 B1 (RUPPEL REMY ET AL) 11 September 2001 (2001-09-11) * the whole document * --- | 1,3-6 | |
| X | US 3 867 225 A (NYSTRAND ERNST DANIEL) 18 February 1975 (1975-02-18) * the whole document * --- | 1,3-7 | |
| X | US 6 136 413 A (LE PORT HERVE ET AL) 24 October 2000 (2000-10-24) * the whole document * --- | 1,6 | |
| X | US 6 277 466 B1 (MCNEIL KEVIN BENSON ET AL) 21 August 2001 (2001-08-21) * the whole document * --- | 1-7 | |
| X | US 6 129 972 A (BOATMAN DONN NATHAN ET AL) 10 October 2000 (2000-10-10) * the whole document * --- | 1-6 | TECHNICAL FIELDS SEARCHED (Int.Cl.7) D21H B31F |
| D,A | WO 99 34055 A (LAMB HANS JUERGEN ;SCA HYGIENE PROD AB (SE); HOLLMARK HOLGER (SE);) 8 July 1999 (1999-07-08) * the whole document * --- | 6-8 | |
| A | US 6 136 146 A (TROKHAN PAUL DENNIS ET AL) 24 October 2000 (2000-10-24) * the whole document * --- | 1-5 | |
| A | US 5 830 558 A (BARNHOLTZ STEVEN LEE) 3 November 1998 (1998-11-03) * the whole document * --- | 1-5 | |

-/--

The present search report has been drawn up for all claims

| Place of search | Date of completion of the search | Examiner |
|---|---|---|
| MUNICH | 19 March 2003 | Nestby, K |

EPO FORM 1503 03.82 (P04C01)

**European Patent Office**

## EUROPEAN SEARCH REPORT

Application Number

EP 02 44 5183

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 529 480 A (TROKHAN PAUL D) 16 July 1985 (1985-07-16) * the whole document * ----- | 1-5 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 19 March 2003 | Nestby, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 1 321 576 A1

## ANNEX TO THE EUROPEAN SEARCH REPORT
## ON EUROPEAN PATENT APPLICATION NO.

EP 02 44 5183

19-03-2003

| Patent document cited in search report | | Publication date | Patent family member(s) | | Publication date |
|---|---|---|---|---|---|
| US 5294475 | A | 15-03-1994 | AT | 183963 T | 15-09-1999 |
| | | | AU | 4393593 A | 04-01-1994 |
| | | | BR | 9307890 A | 25-06-1996 |
| | | | DE | 69326243 D1 | 07-10-1999 |
| | | | DE | 69326243 T2 | 11-05-2000 |
| | | | DK | 647179 T3 | 13-12-1999 |
| | | | EP | 0647179 A1 | 12-04-1995 |
| | | | ES | 2135481 T3 | 01-11-1999 |
| | | | FI | 945816 A | 12-12-1994 |
| | | | GR | 3031476 T3 | 31-01-2000 |
| | | | NO | 944772 A | 09-12-1994 |
| | | | WO | 9325382 A1 | 23-12-1993 |
| | | | US | 5468323 A | 21-11-1995 |
| US 6287676 | B1 | 11-09-2001 | FR | 2684599 A1 | 11-06-1993 |
| | | | AT | 163701 T | 15-03-1998 |
| | | | DE | 69224628 D1 | 09-04-1998 |
| | | | DE | 69224628 T2 | 16-07-1998 |
| | | | DK | 570579 T3 | 30-03-1998 |
| | | | EP | 0570579 A1 | 24-11-1993 |
| | | | ES | 2114033 T3 | 16-05-1998 |
| | | | FI | 933496 A ,B, | 06-08-1993 |
| | | | WO | 9312293 A1 | 24-06-1993 |
| | | | NO | 932807 A | 06-08-1993 |
| US 3867225 | A | 18-02-1975 | NONE | | |
| US 6136413 | A | 24-10-2000 | FR | 2743824 A1 | 25-07-1997 |
| | | | DE | 69706647 D1 | 18-10-2001 |
| | | | DE | 69706647 T2 | 04-07-2002 |
| | | | DK | 876537 T3 | 01-10-2001 |
| | | | EP | 0876537 A1 | 11-11-1998 |
| | | | ES | 2164325 T3 | 16-02-2002 |
| | | | WO | 9727365 A1 | 31-07-1997 |
| | | | PT | 876537 T | 28-02-2002 |
| | | | TR | 9801412 T2 | 21-10-1998 |
| US 6277466 | B1 | 21-08-2001 | AU | 755102 B2 | 05-12-2002 |
| | | | AU | 4641799 A | 13-06-2000 |
| | | | CA | 2351364 A1 | 02-06-2000 |
| | | | CN | 1326522 T | 12-12-2001 |
| | | | EG | 21697 A | 27-02-2002 |
| | | | WO | 0031341 A1 | 02-06-2000 |
| | | | TW | 450891 B | 21-08-2001 |
| US 6129972 | A | 10-10-2000 | AU | 8881798 A | 05-04-1999 |

11

**ANNEX TO THE EUROPEAN SEARCH REPORT
ON EUROPEAN PATENT APPLICATION NO.** EP 02 44 5183

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2003

| Patent document cited in search report | | Publication date | Patent family member(s) | | Publication date |
|---|---|---|---|---|---|
| US 6129972 | A | | BR | 9812823 A | 08-08-2000 |
| | | | CA | 2303387 A1 | 25-03-1999 |
| | | | CN | 1278760 T | 03-01-2001 |
| | | | HU | 0004898 A2 | 28-06-2001 |
| | | | WO | 9914034 A1 | 25-03-1999 |
| | | | JP | 2003505285 T | 12-02-2003 |
| | | | NO | 20001367 A | 16-05-2000 |
| | | | TW | 436424 B | 28-05-2001 |
| | | | ZA | 9808509 A | 18-03-1999 |
| WO 9934055 | A | 08-07-1999 | SE | 511143 C2 | 09-08-1999 |
| | | | AU | 739921 B2 | 25-10-2001 |
| | | | AU | 2083299 A | 19-07-1999 |
| | | | BR | 9814541 A | 10-10-2000 |
| | | | CN | 1285887 T | 28-02-2001 |
| | | | EP | 1073790 A1 | 07-02-2001 |
| | | | HU | 0100624 A2 | 28-06-2001 |
| | | | JP | 2002500285 T | 08-01-2002 |
| | | | PL | 341564 A1 | 23-04-2001 |
| | | | SE | 9704908 A | 01-07-1999 |
| | | | WO | 9934055 A1 | 08-07-1999 |
| | | | US | 6344110 B1 | 05-02-2002 |
| US 6136146 | A | 24-10-2000 | US | 5804281 A | 08-09-1998 |
| | | | US | 5614061 A | 25-03-1997 |
| | | | US | 5443691 A | 22-08-1995 |
| | | | US | 5277761 A | 11-01-1994 |
| | | | US | 5654076 A | 05-08-1997 |
| | | | US | 5534326 A | 09-07-1996 |
| | | | US | 5804036 A | 08-09-1998 |
| | | | AU | 8555398 A | 16-03-1999 |
| | | | BR | 9811729 A | 05-09-2000 |
| | | | CA | 2300902 A1 | 04-03-1999 |
| | | | CN | 1275178 T | 29-11-2000 |
| | | | EP | 1019579 A1 | 19-07-2000 |
| | | | WO | 9910597 A1 | 04-03-1999 |
| | | | JP | 2001514344 T | 11-09-2001 |
| | | | TW | 384332 B | 11-03-2000 |
| | | | ZA | 9807443 A | 22-02-1999 |
| | | | US | 5820730 A | 13-10-1998 |
| | | | US | 5843279 A | 01-12-1998 |
| | | | AT | 158357 T | 15-10-1997 |
| | | | AU | 667192 B2 | 14-03-1996 |
| | | | AU | 2294292 A | 25-01-1993 |
| | | | BR | 9206066 A | 15-11-1994 |
| | | | CA | 2111873 A1 | 07-01-1993 |

**ANNEX TO THE EUROPEAN SEARCH REPORT
ON EUROPEAN PATENT APPLICATION NO.**

EP 02 44 5183

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2003

| Patent document cited in search report | | Publication date | Patent family member(s) | | Publication date |
|---|---|---|---|---|---|
| US 6136146 | A | | CN | 1071470 A ,B | 28-04-1993 |
| | | | CZ | 9302878 A3 | 13-07-1994 |
| | | | DE | 69222308 D1 | 23-10-1997 |
| | | | DE | 69222308 T2 | 05-02-1998 |
| | | | DK | 591435 T3 | 27-10-1997 |
| | | | EP | 0591435 A1 | 13-04-1994 |
| | | | ES | 2108126 T3 | 16-12-1997 |
| | | | FI | 935865 A | 15-02-1994 |
| | | | GR | 3024772 T3 | 31-12-1997 |
| | | | HK | 1003035 A1 | 30-09-1998 |
| | | | HU | 67906 A2 | 29-05-1995 |
| | | | IE | 922098 A1 | 30-12-1992 |
| | | | JP | 7502077 T | 02-03-1995 |
| | | | KR | 245350 B1 | 15-02-2000 |
| | | | MX | 9203473 A1 | 01-12-1992 |
| | | | NO | 934810 A | 28-02-1994 |
| | | | NZ | 243328 A | 26-10-1995 |
| | | | PL | 171010 B1 | 28-02-1997 |
| | | | PT | 101127 A ,B | 29-10-1993 |
| | | | SG | 68557 A1 | 16-11-1999 |
| | | | SK | 147993 A3 | 07-12-1994 |
| | | | TR | 28687 A | 08-01-1997 |
| | | | WO | 9300475 A1 | 07-01-1993 |
| | | | US | 5527428 A | 18-06-1996 |
| | | | AT | 166403 T | 15-06-1998 |
| | | | AU | 677959 B2 | 15-05-1997 |
| | | | AU | 4671093 A | 03-03-1994 |
| US 5830558 | A | 03-11-1998 | AU | 723833 B2 | 07-09-2000 |
| | | | AU | 3063897 A | 09-12-1997 |
| | | | BR | 9709347 A | 10-08-1999 |
| | | | CN | 1222211 A ,B | 07-07-1999 |
| | | | EP | 0900301 A1 | 10-03-1999 |
| | | | JP | 3105003 B2 | 30-10-2000 |
| | | | JP | 11514047 T | 30-11-1999 |
| | | | KR | 2000015879 A | 15-03-2000 |
| | | | TW | 393399 B | 11-06-2000 |
| | | | WO | 9744528 A1 | 27-11-1997 |
| | | | ZA | 9704291 A | 18-12-1997 |
| US 4529480 | A | 16-07-1985 | AT | 33864 T | 15-05-1988 |
| | | | CA | 1243529 A1 | 25-10-1988 |
| | | | DE | 3470764 D1 | 01-06-1988 |
| | | | EP | 0140404 A1 | 08-05-1985 |
| | | | FI | 843316 A ,B, | 24-02-1985 |
| | | | US | 4637859 A | 20-01-1987 |

EPO FORM P0459

For more details about this annex : see Official Journal of the European Patent Office, No. 12/82

13